# EUROPÄISCHE PATENTANMELDUNG

(11) **EP 3 620 770 A1**
(43) Veröffentlichungstag der Anmeldung: **11.03.2020**
(21) Anmeldenummer: 19196360.2
(22) Anmeldetag: 10.09.2019
(51) Int. Cl.: G01M 17/007

(54) **UMFELDSIMULATIONSSYSTEM FÜR EINEN PRÜFSTAND UND PRÜFSTAND**

(30) Priorität: 10.09.2018 DE 202018105162 U
(71) Anmelder: EDAG Engineering GmbH, 65205 Wiesbaden (DE)
(72) Erfinder: BIRKEMEYER, Lukas, 38102 Braunschweig (DE); KABIERSKE, Matthias, 38477 Jembke (DE); KOCH, Martin, 38440 Wolfsburg (DE)
(74) Vertreter: Isarpatent

(57) **Zusammenfassung**

Die vorliegende Erfindung bezieht sich auf ein Umfeldsimulationssystem für einen Prüfstand zum Testen von technischen Anlagen, Maschinen oder Systemen, insbesondere zum Testen von Assistenzsystemen in oder für Kraftfahrzeuge, mit mindestens einer Positioniereinrichtung, mit mindestens einer Umfeldsimulationsvorrichtung, die mittels der Positioniereinrichtung relativ zu einem stationär angeordneten Testobjekt beliebig positionierbar ist, mit einer Erfassungsvorrichtung mit einem Erfassungsbereich, innerhalb dessen die Erfassungsvorrichtung eine Bewegung der Umfeldsimulationsvorrichtung erfassen kann, wobei das Umfeldsimulationssystem ferner dazu ausgebildet ist: einen vorbestimmten Bewegungsablauf für die mindestens eine Umfeldsimulationsvorrichtung zu definieren; mittels der Erfassungsvorrichtung den vorbestimmten Bewegungsablauf in dem Erfassungsbereich zu erfassen; und eine Interaktion der mindestens einen Umfeldsimulationsvorrichtung mit dem Testobjekt auf der Grundlage des mit der Erfassungsvorrichtung erfassten Bewegungsablaufs der mindestens einen Umfeldsimulationsvorrichtung auszuwerten. Die vorliegende Erfindung bezieht sich ferner auf einen Prüfstand.

## Beschreibung

### GEBIET DER ERFINDUNG

Die vorliegende Erfindung bezieht sich auf ein Umfeldsimulationssystem sowie auf einen Prüfstand.

### TECHNISCHER HINTERGRUND

Technische Anlagen oder Maschinen, wie insbesondere Fertigungsanlagen und/oder Fahrzeuge, sind im Raum entweder durch einen Fahrer oder fahrerlos bewegbar. Es ist auch denkbar, dass nur ein Teil der technischen Anlage oder Maschine relativ zu dem übrigen Teil der technischen Anlagen oder Maschine bewegbar ist. Damit es bei der Bewegung nicht zu Kollisionen kommt, verfügen diese technischen Anlagen oder Maschinen oftmals über eine geeignete Sensorik, die zur Vermeidung von Kollisionen mit Objekten, wie Lebewesen oder Gegenständen, im Umfeld der technischen Anlage oder Maschine zum Einsatz kommt.

Beispielsweise sind bei Fahrzeugen verschiedene Sensoren vorne am Fahrzeug und/oder hinten am Fahrzeug und/oder seitlich am Fahrzeug eingebaut, mit welchen unter anderem beim Parken erfasst werden kann, ob eine Kollision mit einem Objekt droht oder nicht. Das Ergebnis der Erfassung wird mittels eines entsprechenden Fahrerassistenzsystems, wie etwa einem Einparkassistenten, ausgewertet und für den Fahrer mittels Warnhinweisen ausgegeben.

Zum Schutz von Lebewesen, der technischen Anlagen oder Maschinen und/oder Objekten im Umfeld der technischen Anlagen oder Maschinen ist es somit unverzichtbar, dass die Sensorik zuverlässige Erfassungsergebnisse liefert. Zudem ist sicherzustellen, dass Fahrerassistenzsysteme eine zuverlässige Auswertung der Erfassungsergebnisse der Sensorik durchführen.

Das Deutsche Patent DE 10 2009 012281 B4 beschreibt eine Vorrichtung zum Bewegen von Prüfkörpern, wie etwa Kraftfahrzeugen, entlang beliebiger Trajektorien und mit beliebigen Geschwindigkeiten. Hierzu wird eine Tragseilvorrichtung verwendet, die vier Seile, zu jedem Seil jeweils eine elektrisch ansteuerbare Auf- und Abwickeleinrichtung sowie zu jedem Seil jeweils einen Tragmast aufweist. Eine Halteeinrichtung zur Befestigung des Prüfkörpers koppelt die Seile miteinander. Eine Steuereinrichtung nimmt Positionssignale mit Informationen über die jeweils augenblickliche Position eines Kraftfahrzeugs auf einem Versuchsfeld auf, verarbeitet diese Positionssignale und erzeugt Steuersignale, die eine Bewegung des Prüfkörpers in einer vorbestimmten Weise veranlassen. Dies soll die Charakterisierung oder Prüfung der Funktion von Fahrerassistenzsystemen ermöglichen. In der DE 10 2009 012281 B4 ist indes kein eigens dafür vorgesehener Prüfstand offenbart, der eine Umfeldbedingung von anderen Verkehrsteilnehmern oder sonstigen Umweltbedingungen simuliert. Vielmehr sind die Kraftfahrzeuge im Versuchsfeld beweglich und somit nicht stationär angeordnet.

Die DE 10 2014 013236 B4 betrifft eine Prüfvorrichtung zum automatisierten Prüfen einer Funktionsfähigkeit eines Fahrzeugs, welches wenigstens einen Scheinwerfer zum Erzeugen einer in Abhängigkeit von Gegenlicht eines anderen Verkehrsteilnehmers einstellbaren Lichtverteilung umfasst. Dabei ist wenigstens ein Lichtszenario zur Simulation des anderen Verkehrsteilnehmers mittels einer Steuereinrichtung der Prüfvorrichtung einstellbar und mittels einer Lichterzeugungseinrichtung der Prüfvorrichtung erzeugbar. Bei der Prüfvorrichtung der DE 10 2014 013236 B4 wird also nur ein konkreter Aspekt bzw. eine Bedingung einer spezifischen Straßensituation simuliert, nicht jedoch mehrere Aspekte bzw. verschiedene Umweltbedingungen.

### ZUSAMMENFASSUNG DER ERFINDUNG

Vor diesem Hintergrund besteht eine Aufgabe der vorliegenden Erfindung darin, eine verbesserte Umfeldsimulation, insbesondere eine verbesserte Umfeldsimulation für den Einsatz in einem Prüfstand, anzugeben. Insbesondere soll ein Umfeldsimulationssystem für einen Prüfstand zum Testen von technischen Anlagen oder Maschinen und einen solchen Prüfstand bereitgestellt werden, mit welchen die Funktion von Sensorik und/oder Fahrerassistenzsystemen sicher, einfach und verlässlich getestet werden.

Erfindungsgemäß wird zumindest eine dieser Aufgaben durch ein Umfeldsimulationssystem mit den Merkmalen des Patentanspruchs 1 und/oder durch einen Prüfstand mit den Merkmalen des Patentanspruchs 15 gelöst.

Demgemäß ist vorgesehen:
- Ein Umfeldsimulationssystem für einen Prüfstand zum Testen von technischen Anlagen, Maschinen oder Systemen, insbesondere zum Testen von Assistenzsystemen in oder für Kraftfahrzeuge, mit mindestens einer Positioniereinrichtung, mit mindestens einer Umfeldsimulationsvorrichtung, die mittels der Positioniereinrichtung relativ zu einem Testobjekt, insbesondere zu einem stationär angeordneten Testobjekt, beliebig positionierbar ist, mit einer Erfassungsvorrichtung mit einem Erfassungsbereich, innerhalb dessen die Erfassungsvorrichtung eine Bewegung der Umfeldsimulationsvorrichtung erfassen kann, wobei das Umfeldsimulationssystem ferner dazu ausgebildet ist: einen vorbestimmten Bewegungsablauf für die mindestens eine Umfeldsimulationsvorrichtung zu definieren; mittels der Erfassungsvorrichtung den vorbestimmten Bewegungsablauf in dem Erfassungsbereich zu erfassen; und eine Interaktion der mindestens einen Umfeldsimulationsvorrichtung mit dem Testobjekt auf der Grundlage des mit der Erfassungsvorrichtung erfassten Bewegungsablaufs der mindestens einen Umfeldsimulationsvorrichtung auszuwerten.
- Einen Prüfstand, mit einem Testfeld zur Positionierung, vorzugsweise stationären Positionierung, eines Testobjekts, und mit einem erfindungsgemäßen Umfeldsimulationssystem.

Mit dem erfindungsgemäßen Umfeldsimulationssystem lässt sich eine Vielzahl von realen Situationen nachstellen, so dass für die Sensorik nahezu unbegrenzte Testszenarien einrichtbar und durchführbar sind. Zudem kann dadurch die Funktion von Systemen, deren Funktion auf den Erfassungsergebnissen aufbaut, in einer Vielzahl von Varianten getestet werden. Derartige Systeme, deren Funktion auf den Erfassungsergebnissen aufbaut, sind insbesondere Fahrerassistenzsysteme in oder für Fahrzeuge.

Das Fahrzeug kann insbesondere ein Kraftfahrzeug (KFZ) oder Personenkraftwagen (PKW), Lastkraftwagen (LKW), Bus, Landfahrzeug, Baufahrzeug, Baumaschine, Kran, usw. sein.

Darüber hinaus ist es mit dem erfindungsgemäßen Umfeldsimulationssystem möglich, ein gleichzeitiges Zusammenwirken von mindestens zwei Fahrerassistenzsystemen gleichzeitig zu testen. Dadurch kann die Funktion von Sensorik und/oder von Fahrerassistenzsystemen sicher, einfach und verlässlich getestet werden. In Folge dessen wird der Betrieb von technischen Anlagen oder Maschinen, wie insbesondere Fertigungsanlagen und/oder Fahrzeugen, sicherer und zuverlässiger.

Unter einem Prüfstand ist im Kontext der vorliegenden Patentanmeldung ein Gerät oder eine Vorrichtung zu verstehen, mit dem ein technischer Gegenstand auf seine Eigenschaften reproduzierbar geprüft werden kann. Zu einem Prüfstand gehört neben der mechanischen Ausführung zur stationären Aufnahme des Testobjektes auch die entsprechende Sensorik und Steuerung, um die Eigenschaften generieren und Messwerte protokollieren zu können.

Unter einem Bewegungsablauf oder Trajektorie ist im Kontext der vorliegenden Patentanmeldung eine Bahn oder ein Bewegungspfad eines Objektes zu verstehen. Ein solcher Bewegungsablauf bzw. eine solche Trajektorie ist durch einen Anfangs- oder Startpunkt und einen Endpunkt gekennzeichnet.

Zusätzlich zu der Umfeldsimulationsvorrichtung kann bei einer Ausführungsform auch die Erfassungsvorrichtung mittels der Positioniereinrichtung oder mittels einer weiteren Positioniereinrichtung positionierbar sein.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Ausgestaltung ist die Positioniereinrichtung dazu ausgebildet, die Umfeldsimulationsvorrichtung im Erfassungsraum frei, also in dreidimensionalen Raum zu positionieren.

In einer bevorzugten Ausgestaltung weist die Umfeldsimulationsvorrichtung zumindest einen mit Infrarotkameras erfassbaren Marker auf. Alternativ oder zusätzlich kann die Umfeldsimulationsvorrichtung zumindest einen mit Lasertrackern erfassbaren Marker aufweisen. Die Erfassungsvorrichtung weist ferner eine Vielzahl von Infrarotkameras und/oder Lasertrackern auf, die derart angeordnet und ausgebildet sind, um im Erfassungsbereich befindliche Marker der Umfeldsimulationsvorrichtung zu erfassen. Beispielsweise kann mit Lasertrackern und zugehörigen Markern die Position der Umfeldsimulationsvorrichtung erfasst werden. Derartige Marker werden vorzugsweise als optische Markierung für die Ablaufkontrolle in Produktionsprozessen verwendet. Z.B. kann ein Passermarker oder dergleichen verwendet werden.

In einer bevorzugten Ausgestaltung weist das Umfeldsimulationssystem ferner eine Heiz- und/oder Kühleinrichtung auf. Die Heiz- und/oder Kühleinrichtung ist bezüglich der Umfeldsimulationsvorrichtung derart angeordnet und ausgestaltet, um eine im Erfassungsbereich befindliche Umfeldsimulationsvorrichtung thermisch zu beeinflussen. Mithin wird hier als Umweltbedingung also eine bestimmte Temperatur, z.B. Frostbedingungen, "normale" Tagestemperaturen, sehr heiße Temperaturen, etc. unter Verwendung der Umfeldsimulationsvorrichtung simuliert.

In einer bevorzugten Ausgestaltung ist zumindest eine Positioniervorrichtung als Roboter - oder als Teil eines Roboters - ausgebildet. Ein Roboter ist eine gesteuerte technische Apparatur, die häufig wiederkehrende mechanische Arbeit ausführt, wobei der Roboter sowohl ortsfest als auch mobil ausgebildet sein kann. Mittels des Roboters lassen sich im Prüfstand befindliche Elemente des Umfeldsimulationsystems bzw. der Umweltsimulationsvorrichtung innerhalb gewisser Beweglichkeitsgrenzen des Roberts beliebig in alle Richtungen bewegen.

In einer bevorzugten Ausgestaltung ist zumindest eine Umweltsimulationsvorrichtung vorgesehen, welche dazu ausgebildet ist, mindestens eine vorgegebene Umgebungsbedingung und/oder eine vorgegebenen Umwelteinfluß - vorzugsweise mindestens zwei Umgebungsbedingungen und/oder Umwelteinflüße gleichzeitig - zu simulieren.

Als vorgegebene Umgebungsbedingung und/oder Umwelteinfluß kommt vorzugsweise, jedoch nicht ausschließlich, Folgendes in Betracht:
- eine Oberflächenbeschaffenheit des Testfelds, auf dem die mindestens eine Umfeldsimulationsvorrichtung bewegbar ist;
- Luftfeuchtigkeit;
- Regen;
- Helligkeit;
- Lichtwechsel;
- Windgeschwindigkeit;
- Temperatur;
- Blitze, die zum Beispiel durch Stroboskope erzeugt wurden.

Für eine geeignete Veränderung der Oberflächenbeschaffenheit kann zum Beispiel der Boden des Prüfstands bzw. des Erfassungsbereichs austauschbar ausgebildet sein, beispielsweise in so genannter Sandwich-Bauart. Bei dieser Sandwichbauart können zum Beispiel Bodensegmente vorgegebener Form puzzleartig ausgetauscht werden, sodass auf diese Weise unterschiedliche Oberflächenbeschaffenheiten (wie etwa verschiedene Asphaltarten, Beton, Pflaster, Rasen, Schotter, etc., nachgebildet werden können. In Kombination mit einer Heiz-/Kühlvorrichtung, die im Boden integriert ist und mittels der den Boden temperierbar ist, können dadurch zusätzlich verschiedene Oberflächenbeschaffenheiten für den Betrieb eines Kraftfahrzeugs simuliert werden. Zum Beispiel kann mittels einer Fußbodenheizung ein Hitzeflimmern nachgestellt werden. Vor allem kann zum Beispiel in Verbindung mit einer Sprinkleranlage die Ausbildung von Bodennebel oder ein Nebel bei Sommerregen nachgestellt werden. Mittels einer Fußbodenkühlung kann eine vereiste Fahrbahn nachgestellt werden.

Zur Bereitstellung einer geeigneten Luftfeuchtigkeit am Testfeld kann zum Beispiel eine Nebelmaschine vorgesehen sein, indem durch Einspeisen von Nebel in den Erfassungsbereich am Testfeld. Beispielsweise kann hier ein Ultraschallvernebler durch Zerstäubung von Flüssigkeiten verwendet werden. Die Nebelerzeugung erfolgt hier mittels mechanischer Schwingungen bis in den Megahertz-Bereich, die auf einen Flüssigkeitsfilm übertragen werden. Diese z.B. piezo-elektrisch erzeugten elektrischen Schwingungen werden in mechanische Schwingungen umwandeln. Diese mechanischen Schwingungen führen dazu, dass sich an der Oberfläche des Flüssigkeitsfilmes Kapillarwellen ausbilden, die sich mit steigender Anregungsfrequenz exponentiell aufrichten. Erreicht die Anregungsfrequenz einen bestimmten Wert, können sich Tropfen eines bestimmten Durchmessers ausbilden. Die Erzeugung des Nebels dient zum Beispiel dazu, sowohl eine gewisse Luftfeuchtigkeit, aber auch Sichtnebel, welcher zum Beispiel störend für Kameras von Fahrerassistenzsystemen sein kann, nachzubilden.

Zur Beeinflussung der Luftfeuchtigkeit kommen Luftbefeuchter, Verdampfer, etc. (für hohe Luftfeuchtigkeit) oder geeignete Trockner (für niedrige Luftfeuchtigkeit) in Betracht.

Zur Erzeugung von Regen kommt vorzugsweise eine Sprinkleranlage in Betracht, die z.B. an der Decke und ggfs. auch an den Wanden des Prüfstands installiert ist. Zusätzlich können auch noch frei im Prüfstand positionierbare Spritzdüsen vorgesehen sein.

Zusätzlich oder alternativ kann in analoger Weise eine Beschneiungsanlage eingerichtet werden, um auf diese Weise eine verschneite Testlandschaft im Prüfstand nachzubilden.

Zur Beeinflussung der Helligkeit und/oder von Lichtwechseln sind zum Beispiel Beleuchtungssysteme denkbar, die mit verschiedenen Farb- und Helligkeitsmöglichkeiten um und über dem Testfeld aufgebaut sind. Zudem kann auch eine Montagevorrichtung für Scheinwerfer vorgesehen sein, die z.B. die Scheinwerfer von anderen (z.B. entgegenkommenden) Fahrzeugen unterschiedlichen Fahrzeugtyps nachstellen.

Zur Beeinflussung der Windeigenschaften, insbesondere Windrichtung, Windgeschwindigkeit, Windart (z.B. Böen), können geeignet und ausgerichtete Ventilatoren in Betracht kommen. Die Ventillatoren sind vorzugsweise frei im Prüfstand positionierbar. Zusätzlich kann als Umweltsimulationsvorrichtung auch ein Windkanal herangezogen werden, in welchem die Umfelssimulationsvorrichtung und das Testobjekt angeordnet sind. Dieser Windkanal bzw. die verschiedenen Ventilatoren dienen der Beschleunig der Luft im Prüfstand.

Die Beeinflussung der Temperatur kann auf vielerlei Art und Weise erfolgen: Beispielsweise kann im Prüfstand eine geeignete Heizung oder sogar Klimaanlage vorgesehen sein. Denkbar wäre jedoch auch eine Klimakammer mit Heizung, Klimaanlage, Luftfeuchtigkeitsregelung. Zusätzlich oder alternativ können einzelnen Elementen innerhalb der Prüfstands, wie etwa dem Testobjekt, dem gesamten Umfeldsimulationssystem, dem Umweltsimulationsvorichtungen oder dergleichen jeweilige Heiz- oder Kühlvorrichtungen zugordnet sein oder in diesen integriert sein. Beispielweise können IR-Kameras zum Aufheizen von Personen-Dummies vorgesehen sein. Alternativ oder zusätzlich können IR-LEDs zum Heizen vorgesehen sein. Auf diese Weise können Kameras / IR-Kameras auch getestet werden.

Ein Stroboskop stellt ein Blitzgerät, das Lichtblitze in vorzugsweise regelmäßigen zeitlichen Abständen abgibt. Statt der Aussendung von Blitzen in regelmäßigen Abständen können auch gesteuert von einer Steuereinrichtung Lichtblitze zu fest vorgegebenen Zeitpunkten oder alternativ auch zufällig erzeugt werden. Alternativ zu einem Stroboskop kann hierzu auch eine Stroboskopscheibe (sich drehende Kreissektorblende) verwendet werden, wenn sie die Lichtquelle oder das zu betrachtende Objekt verdeckt.

In einer bevorzugten Ausgestaltung ist das Umfeldsimulationssystem dazu ausgebildet ist, ein als Kraftfahrzeug ausgebildetes Testobjekt, insbesondere zumindest ein Assistenzsystem des Kraftfahrzeugs, zu testen. Das Testobjekt befindet sich dabei stationär im Testfeld, wobei sich die Umfeldsimulationsvorrichtung relativ zu dem Testobjekt bewegt, um so sowohl eine Umfeldsituation und vorzugsweise auch gleichzeitig eine spezielle Umweltsituation zu simulieren, also nachzustellen.

In einer bevorzugten Ausgestaltung ist das Umfeldsimulationssystem dazu ausgebildet, eine Interaktion der Umfeldsimulationsvorrichtung und/oder Umweltsimulationsvorrichtung mit dem Testobjekt auf der Grundlage des mit der Erfassungsvorrichtung erfassten Bewegungsablaufs der Umfeldsimulationsvorrichtung und von Erfassungsdaten einer Sensorik des Testobjekts auszuwerten.

In einer bevorzugten Ausgestaltung dient die Auswertung der Interaktion der Validierung der verwendeten Sensorik und/oder der Validierung eines verwendeten Fahrerassistenzsystems des Fahrzeugs. Dabei kann das Fahrerassistenzsystem des Fahrzeugs zur Verwendung der Erfassungsdaten der Sensorik ausgestaltet sein. Vorzugsweise ist das Umfeldsimulationssystem dazu ausgebildet, ein vorgegebenes Fahrerassistenzsystem eines zum Testobjekt unterschiedlichen Fahrzeugs nachzustellen oder zu simulieren. Dies kann zum Beispiel dadurch geschehen, dass das Umfeldsimulationssystem eine durch ein anderes Fahrzeug verursachte Störquelle und dadurch verursache Interferenzen, wie sie zum Beispiel beim Einsatz von Radargeräten erzeugt werden, nachzubilden.

In einer bevorzugten Ausgestaltung ist eine Überwachungseinrichtung vorgesehen, die derart ausgebildet und angeordnet ist, um den vorbestimmten Bewegungsablauf für die mindestens eine Umfeldsimulationsvorrichtung zur Verhinderung von Kollisionen zwischen der mindestens einen Umfeldsimulationsvorrichtung und dem Testobjekt zu überwachen.

In einer bevorzugten Ausgestaltung weist das Umfeldsimulationssystem mindestens zwei Umfeldsimulationsvorrichtungen auf. Das Umfeldsimulationssystem ist ferner dazu ausgestaltet, die vorbestimmten Bewegungsabläufe für die mindestens zwei Umfeldsimulationsvorrichtungen zur Verhinderung von Kollisionen zwischen den mindestens zwei Umfeldsimulationsvorrichtungen zu überwachen.

In einer bevorzugten Ausgestaltung ist mindestens eine Erfassungseinrichtung vorgesehen, die Messungen mittels mindestens eines der nachfolgend genannten Komponenten ausführt:
- Rotationstheodolit,
- Radar, wie etwa Laserradar, alle Arten von Nah-, Mittel-, Fernbereichsradar,
- Kameras, wie etwa zur Erfassung von Markern,
- Lasertracker mit Orientierungsempfängern,
- Lasertracker ohne Orientierungsempfängern.

Zum Testen Radar kann ein entsprechender Radar-Prüfstand vorgesehen sein: Mittels dieses Radar-Prüfstands kann elektromagnetische Radarstrahlung von anderen Radarstrahlern aufgenommen, manipuliert und zurückgesendet werden, um auf diese Weise Objekte in weiter Ferne zu simulieren, z.B. montiert auf einer Linearachse.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: ein vereinfachtes Schaubild eines Prüfstands mit einem Umfeldsimulationssystem gemäß einem ersten Ausführungsbeispiel;
- Fig. 2: ein Flussdiagramm eines Verfahrens, das mit dem Umfeldsimulationssystem gemäß dem ersten Ausführungsbeispiel durchführbar ist;
- Fig. 3: ein vereinfachtes Schaubild eines Prüfstands mit einem Umfeldsimulationssystem gemäß einem zweiten Ausführungsbeispiel; und
- Fig. 4: ein stark vereinfachtes Schaubild eines Prüfstands mit einem Umfeldsimulationssystem gemäß einem dritten Ausführungsbeispiel.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausführt ist - jeweils mit denselben Bezugszeichen versehen.

### BESCHREIBUNG VON AUSFÜHRUNGSBEISPIELEN

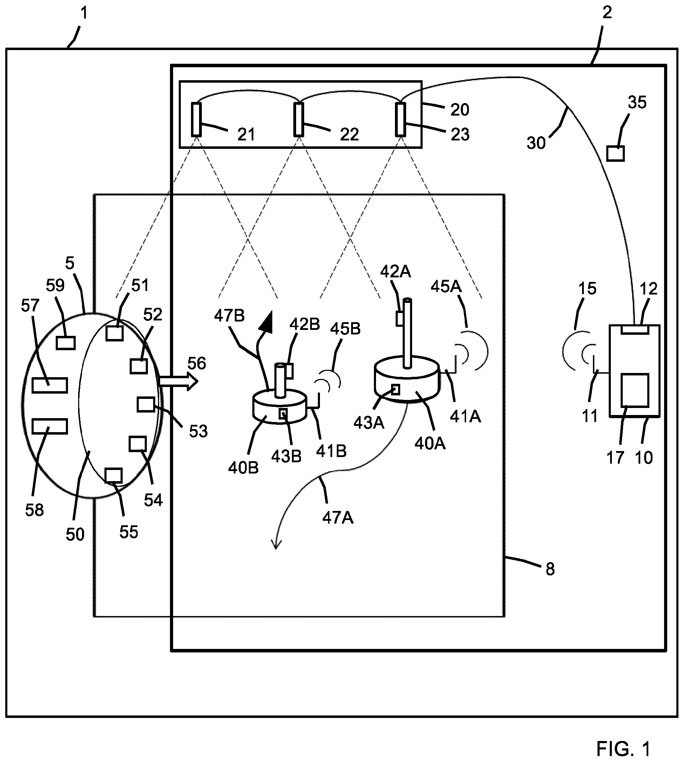

Fig. 1 zeigt sehr schematisch einen Prüfstand 1 mit einem Umfeldsimulationssystem 2 und einem Testobjekt 5, das in dem Testfeld 8 frei positionierbar ist. Das Testobjekt 5 ist ein beliebiges Testobjekt 5, das durch Antrieb eines Antriebssystems Bewegungen im Raum ausführen kann. Die Bewegungen können entweder automatisiert ablaufen oder von einem Bediener des Testobjekts 5 initiiert und/oder gesteuert sein.

Insbesondere ist das Testobjekt 5 ein Roboter an einer Fertigungsstraße zur Fertigung von Produkten, wie beispielsweise Fahrzeugen, Haushaltsgeräten, usw. Alternativ ist das Testobjekt 5 ein Fahrzeug, wie beispielsweise ein Personenkraftwagen (PKW) oder ein Lastkraftwagen (LKW), oder ein Bus, insbesondere ein Reisebus und/oder Doppelstockbus zur Beförderung von Personen. Es ist noch weiter alternativ möglich, dass das Fahrzeug eine Landmaschine, insbesondere ein Traktor, ein Mähdrescher, usw., oder ein Schienenfahrzeug, ein Baufahrzeug, ein Kran, ein Fahrzeug für die Verrichtung von Arbeiten untertage usw. ist. Das Fahrzeug kann jedes Fahrzeug sein, an welchem die nachfolgend beschriebenen Merkmale nutzbar sind. Das Testobjekt 5 bzw. der Roboter oder das Fahrzeug kann im Normalbetrieb mittels eines Fahrers gefahren bzw. geführt sein. Alternativ kann das Testobjekt 5 bzw. der Roboter oder das Fahrzeug im Normalbetrieb fahrerlos bewegt werden. Im Testbetrieb auf dem Prüfstand 1 wird das Testobjekt 5 bei dem vorliegenden Ausführungsbeispiel jedoch im Stillstand getestet. Denkbar wäre bei weiteren Ausführungsbeispielen aber auch, das Fahrzeug auf dem Prüfstand zu bewegen, beispielsweise mittels einer Bewegungs-Maschine wie einem Hexapod oder dergleichen, oder einen Testbetrieb in Bewegung des Fahrzeugs durchzuführen.

Das Testobjekt 5 beinhaltet Sensorik 50, die mindestens eine Erfassungseinrichtung 51 bis 55 aufweist. Die von der mindestens einen Erfassungseinrichtung 51 bis 55 erfassten Erfassungsergebnisse werden als Daten 56 an das Umfeldsimulationssystem 2 gesendet. Zudem kann das Testobjekt 5, falls das Testobjekt 5 ein Fahrzeug ist, mindestens ein Fahrerassistenzsystem 57, 58 aufweisen, das jeweils mindestens ein Erfassungsergebnis der Sensorik 50 verwendet. Das Umfeldsimulationssystem 2 ist zum Testen der Sensorik 50 ausgestaltet. Zusätzlich oder alternativ kann das Umfeldsimulationssystem 2 die Funktion des mindestens einen Fahrerassistenzsystems 57, 58 testen. An dem Testobjekt 5 ist optional mindestens ein Marker 59 vorhanden, in welchem Informationen zu dem Testobjekt 5, wie beispielsweise Art, Typ, Modell, Serie, usw. gespeichert sind. Die Informationen des Markers 59 sind von dem Umfeldsimulationssystem 2 auslesbar. Das Umfeldsimulationssystem 2 hat eine Simulationszentrale 10, eine Erfassungsvorrichtung 20, die mindestens eine Erfassungseinrichtung 21 bis 23 aufweist, eine Kommunikationsverbindung 30, über welche Daten 35 übertragbar sind, und mindestens eine Umfeldsimulationsvorrichtung 40A, 40B. Ist mehr als eine Umfeldsimulationsvorrichtung 40A, 40B vorhanden, ist es denkbar, dass die Umfeldsimulationsvorrichtung 40A, 40B identisch ausgestaltet sind. Alternativ sind mindestens zwei der Umfeldsimulationsvorrichtungen 40A, 40B in zumindest einem Merkmal verschieden ausgestaltet.

Die mindestens eine Umfeldsimulationsvorrichtung 40A, 40B ist möglicherweise als Roboter ausführbar, der mit mindestens einem Objekt bestückt ist, dass nach Wunsch modelliert ist. Als Roboter in Bezug auf die mindestens eine Umfeldsimulationsvorrichtung 40A, 40B wird jegliche Art von mechanischer Bewegungsvorrichtung verstanden, welche sich zumindest teilweise frei im Raum nach einer einprogrammierten Bewegungsvorschrift bewegen kann.

Die Simulationszentrale 10 hat eine Sende-Empfangseinrichtung 11 zum Senden oder zum Empfang eines Signals 15 und eine Bedieneroberfläche 17. Die Sende-Empfangseinrichtung 11 ist bei dem Beispiel von Fig. 1 eine drahtlose Sende-Empfangseinrichtung 11, so dass das Signal 15 ein drahtloses Signal ist. Mit dem Signal 15 können Daten gemäß einem Protokoll für ein drahtloses Datenübertragungsverfahren an einen entsprechenden Empfänger gesendet werden oder von einem entsprechenden Sender empfangen werden. Zudem hat die Simulationszentrale 10 eine Schnittstelle 11, an welche die Kommunikationsverbindung 30 angeschlossen ist.

Die Simulationszentrale 10 und die Erfassungsvorrichtung 20 sind über die Kommunikationsverbindung 30 derart miteinander verbunden, dass sich die Simulationszentrale 10 und die Erfassungsvorrichtung 20 Daten 35 senden können. Somit ist die Kommunikationsverbindung 30 möglichst bidirektional ausgestaltet. Insbesondere ist die Kommunikationsverbindung 30 als Bussystem ausgestaltet, das bevorzugt echtzeitfähig ist. In diesem Fall können sich die Simulationszentrale 10 und die Erfassungsvorrichtung 20 die Daten 35 derart schnell zusenden, dass die Daten 35 innerhalb einer vorgegebenen Zeitspanne verfügbar sind, welche keine Verzögerungen für die weitere Verarbeitung hervorrufen. Die Daten 35 können je nach Anwendungsfall nach einer zeitlich zufälligen Verteilung oder zu vorherbestimmten Zeitpunkten anfallen. Dasselbe gilt für die Daten 56 der Erfassungseinrichtung 50 des Testobjekts 5. Hierbei sind die Daten 56 der Erfassungseinrichtung 50 entweder drahtgebunden oder drahtlos an das Umfeldsimulationssystem 2, insbesondere die Simulationszentrale 10, übermittelbar. Somit sind auch die Daten 56 für das Umfeldsimulationssystem 2, insbesondere die Simulationszentrale 10, vorzugsweise in Echtzeit verfügbar.

Die Umfeldsimulationsvorrichtung 40A hat eine Sende-Empfangseinrichtung 41A und optional mindestens einen Marker 42A, und zudem eine Sensorik 43A. Die Sende-Empfangseinrichtung 41A dient zum Senden oder zum Empfang eines Signals 45A. In dem Signal 45A sind insbesondere Positionsinformationen in Bezug auf die Position der Umfeldsimulationsvorrichtung 40A im Raum enthalten. Optional sind in dem Signal 45A zusätzlich oder alternativ Informationen über den Marker 42A enthalten, so dass beispielsweise eine automatische Erkennung der Umfeldsimulationsvorrichtung 40A möglich ist. Die Sende-Empfangseinrichtung 41A ist bei dem Beispiel von Fig. 1 eine drahtlose Sende-Empfangseinrichtung 41A, so dass das Signal 45A ein drahtloses Signal ist. Mit dem Signal 45A können Daten gemäß einem Protokoll für ein drahtloses Datenübertragungsverfahren an einen entsprechenden Empfänger gesendet werden oder von einem entsprechenden Sender empfangen werden. Die Umfeldsimulationsvorrichtung 40A ist gemäß einem beliebigen Bewegungsablauf 47A im Testfeld 8 bewegbar. Hierbei erfasst die Umfeldsimulationsvorrichtung 40A mit der sehr schematisch dargestellten Sensorik 43A ihr Umfeld. Sollten die Erfassungsergebnisse der Sensorik 43A darauf schließen lassen, dass eine Kollision mit einer anderen Umfeldsimulationsvorrichtung, beispielsweise der Umfeldsimulationsvorrichtung 40B oder dem Testobjekt 5 droht, leitet die Umfeldsimulationsvorrichtung 40A eine entsprechende Maßnahme zur Verhinderung der Kollision ein. Solche Maßnahmen können Ausweichen, einschließlich Verlangsamung oder Beschleunigung des Bewegungsablaufs 47A, usw. oder Abbruch des Bewegungsablaufs 47A oder eine sonstige wirksame Maßnahme zur Verhinderung der Kollision sein. Die Sensorik 43A kann zudem eine positionserfassende Sensorik umfassen.

Die Umfeldsimulationsvorrichtung 40B hat eine Sende-Empfangseinrichtung 41B, optional mindestens einen Marker 42B, und zudem eine Sensorik 43B. Die Sende-Empfangseinrichtung 41B dient zum Senden oder zum Empfang eines Signals 45B. In dem Signal 45B sind insbesondere Positionsinformationen in Bezug auf die Position der Umfeldsimulationsvorrichtung 40B im Raum enthalten. Optional sind in dem Signal 45B zusätzlich oder alternativ Informationen über den Marker 42B enthalten, so dass beispielsweise eine automatische Erkennung der Umfeldsimulationsvorrichtung 40B möglich ist. Die Sende-Empfangseinrichtung 41B ist bei dem Beispiel von Fig. 1 eine drahtlose Sende-Empfangseinrichtung 41B, so dass das Signal 45B ein drahtloses Signal ist. Mit dem Signal 45B können Daten gemäß einem Protokoll für ein drahtloses Datenübertragungsverfahren an einen entsprechenden Empfänger gesendet werden oder von einem entsprechenden Sender empfangen werden. Die Umfeldsimulationsvorrichtung 40B ist gemäß einem beliebigen Bewegungsablauf 47B im Testfeld 8 bewegbar. Hierbei führt die Umfeldsimulationsvorrichtung 40B mit Hilfe ihrer sehr schematisch dargestellten Sensorik 43B eine Überwachung ihres Umfelds zur Verhinderung von Kollisionen durch, wie zuvor für die Umfeldsimulationsvorrichtung 40A beschrieben. Die Sensorik 43B kann zudem eine positionserfassende Sensorik umfassen.

Jede der Umfeldsimulationsvorrichtungen 40A, 40B kann ein drahtloses Signal 15 von der Simulationszentrale 10 empfangen. Umgekehrt kann die Simulationszentrale 10 die Signale 45A, 45B von der oder den jeweils vorhandenen Umfeldsimulationsvorrichtung (en) 40A, 40B empfangen. Noch dazu kann die Umfeldsimulationsvorrichtung 40A das Signal 45B von der Umfeldsimulationsvorrichtung 40B empfangen. Außerdem kann die Umfeldsimulationsvorrichtung 40B das Signal 45A von der Umfeldsimulationsvorrichtung 40A empfangen. Dadurch ist mit den Umfeldsimulationsvorrichtung 40A, 40B eine eigenständige Hinderniserkennung, vorzugsweise mit einem vorbestimmten zeitlichen Vorlauf, realisierbar. Zudem ist eine aktive Reaktion auf Hindernisse nach vorgegebenem Muster möglich, wie beispielsweise Ausweichen, Messabbruch, Neustart, usw.

Das Umfeldsimulationssystem 2 führt mittels der mindestens einen Umfeldsimulationsvorrichtung 40A, 40B eine reale Simulation von reellen Szenarien aus. Die Simulation wird in Hardware vorgenommen und bildet ein reelles Umfeld nach, in welchem sich das Testobjekt 5 später im Normalbetrieb befinden wird. Hierbei können als Hindernis beliebige Objekte mit verschiedenen Formen und Größen vor dem Prüfling bewegt werden, nämlich die mindestens eine Umfeldsimulationsvorrichtung 40A, 40B.

In Bezug auf ein Fahrzeug als Testobjekt 5 ist ein derartiges reelles Umfeld insbesondere eine Straße mit beispielsweise Bordsteinkanten und/oder herumlaufenden Tieren oder Menschen und/oder weiteren Fahrzeugen und/oder an der Seite stehenden Pflanzen, usw. Somit ist die mindestens eine Umfeldsimulationsvorrichtung 40A, 40B für den Fall, dass das Testobjekt 5 ein Fahrzeug ist, beispielsweise eine Bordsteinkante oder ein Tierdummy oder ein Menschendummy oder ein Fahrzeugdummy oder eine Pflanze, usw. Die mindestens eine Umfeldsimulationsvorrichtung 40A, 40B kann derart ausgelegt sein, dass Objekte mit einem Schwerpunkt von bis zu ca. 10 kg in ca. 1 m Höhe zuverlässig positionierbar sind. Für eine mindestens teilautomatisierte Fertigungsstraße kann das Umfeld neben Menschendummies je nach Bedarf auch mindestens eines der folgenden Objekte als Umfeldsimulationsvorrichtung 40A, 40B aufweisen, nämlich Paletten, Kisten, Roboter, usw.

Das Umfeldsimulationssystem 2 ermöglicht eine dreidimensionale Positionierung von mehreren, unabhängigen Umfeldsimulationsvorrichtungen 40A, 40B als Zielobjekt an beliebige Zielkoordinaten im Testfeld 8. Hierfür kann die Positionierung erfolgen, indem die Simulationszentrale 10 die Bewegung der mindestens einen Umfeldsimulationsvorrichtung 40A, 40B gemäß dem Bewegungsablauf 47A, 47B vollständig steuert. Alternativ können zumindest Teile der Steuerung des Bewegungsablaufs 47A, 47B durch die jeweilige Umfeldsimulationsvorrichtungen 40A, 40B ausgeführt werden. Hierbei ist ein Abfahren von vordefinierten Bewegungsabläufen möglich. Die Umfeldsimulationsvorrichtungen 40A, 40B und/oder die Simulationszentrale 10 sind jedoch derart ausgestaltet, dass je nach Testszenario zusätzliche Bewegungsabläufe eingebbar sind, die dann von der gewünschten Umfeldsimulationsvorrichtung 40A, 40B abfahrbar sind. Die Positionierung ist mit verschiedenen Genauigkeitsbereichen möglich, wie beispielsweise höhere Auflösung in der Nähe des Testobjekts 5 als in einer größeren Entfernung von dem Testobjekt 5. Hierbei kann eine Genauigkeit von beispielsweise ≤ ± 5 mm erzielt werden.

Die Größe des Testfelds 8 ist je nach Bedarf wählbar. Beispielsweise ist das Testfeld 8 mit einer Größe von ca. 10 m x ca. 20 m für ein Fahrzeug als Testobjekt 5 geeignet. Es sind jedoch andere Größen für das Testfeld 8 denkbar.

Die Erfassungsvorrichtung 20 ist an die Größe des Testfelds 8 angepasst ausgestaltet. Hierfür sind bei dem Beispiel von Fig. 1 mehrere Erfassungseinrichtungen 21 bis 13 vorgesehen, die das Testfelds 8 in dem interessierenden Testbereich erfassen. Hierfür grenzen die in Fig. 1 gestrichelt dargestellten Erfassungsbereiche der Erfassungseinrichtungen 21 bis 13 zumindest aneinander an. Die Erfassungsbereiche der Erfassungseinrichtungen 21 bis 23 können sich jedoch alternativ zumindest teilweise überlappen. Die Erfassungseinrichtungen 21 bis 23 sind beispielsweise als mindestens eine der folgenden Erfassungseinrichtungen ausgebildet, nämlich als Kamera, als Stereokamera, als Infrarotkamera, als Infrarotsensor, als Bewegungsmelder, als Ultraschallsensor, als magnetischer Sensor, als Laserscanner, als Lasertracker usw. Möglicherweise sind die Marker 42A, 42B zusätzlich oder alternativ als Tracker ausgestaltet, die an der mindestens einen Umfeldsimulationsvorrichtung 40A, 40B angebracht sind und von der Erfassungsvorrichtung 20 erkannt werden können. Insbesondere können die Marker 42A , 42B zusätzlich oder alternativ Tracker sein, die von den Erfassungseinrichtungen 21 bis 23 erfassbar sind, die als Infrarotkameras oder als Lasertracker ausgestaltet sind.

42A, 42B zusätzlich oder alternativ Tracker sein, die von den Erfassungseinrichtungen 21 bis 23 erfassbar sind, die als Infrarotkameras ausgestaltet sind.

Dadurch kann die Erfassungseinrichtung 20 die Position der Umfeldsimulationsvorrichtungen 40A, 40B jeweils zweifelsfrei und sehr genau erfassen. Die Simulationszentrale 10 kann auswerten, ob es Unplausibilitäten zwischen dem Erfassungssignal der Erfassungseinrichtungen 21 bis 23 und von Signalen 45A, 45B der Umfeldsimulationsvorrichtungen 40A, 40B gibt. Zusätzlich dazu ist die Simulationszentrale 10 ausgestaltet, Bedienfehler an der Erfassungsvorrichtung 20 zu erkennen. Damit ist eine absolute Positionierung zu jedem Zeitpunkt an jeder Position im Erfassungsbereich möglich.

Das Umfeldsimulationssystem 2 ermöglicht eine beliebige Positionierung des Testobjekts 5 im Erfassungsbereich der Erfassungsvorrichtung 20 im Testfeld 8. In einem solchen Fall kann der mindestens eine Marker 59 ausgelesen werden, um die Ausrichtung und genaue Positionierung des Testobjekts mit Hilfe der Informationen des Markers 59 zu ermitteln.

Im Betrieb führt das Umfeldsimulationssystem 2 das folgende Verfahren aus, bei welchem eine Kommunikation der Vorrichtungen 20, 40 mit der Zentrale 10 über die Kommunikationsverbindung und/oder mittels der Signale 15, 45A, 45B stattfindet. Hierbei ist eine absolute Positionserkennung der zuvor beschriebenen Komponenten des Umfelds in einem relativ zum Testobjekt 5 aufgespannten Koordinatensystem möglich. Das Verfahren kann zumindest teilweise mittels Software realisiert sein.

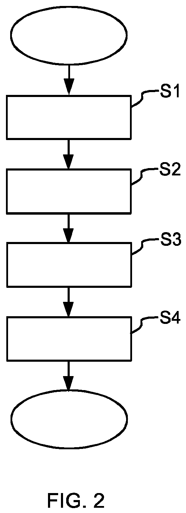

Gemäß Fig. 2 werden nach einem Start des Verfahrens bei einem Schritt S1 Zielkoordinaten für die mindestens eine Umfeldsimulationsvorrichtung 40A, 40B gesetzt. Die Zielkoordinaten können aufgrund eines vorgegeben Szenarios von der Simulationszentrale 10 gesetzt werden. Alternativ oder zusätzlich kann zumindest eine der Zielkoordinaten durch einen Bediener an der Umfeldsimulationsvorrichtung 40A, 40B oder der Bedieneroberfläche 17 der Simulationszentrale 10 gesetzt werden. Danach geht der Fluss zu einem Schritt S2 weiter.

Bei dem Schritt S2 werden die erforderlichen Bewegungsabläufe 47A, 47B für die mindestens eine Umfeldsimulationsvorrichtung 40A, 40B auf der Grundlage der gesetzten Zielkoordinaten für die mindestens eine Umfeldsimulationsvorrichtung 40A, 40B definiert. Hierbei wird der Bewegungsablauf 47A, 47B ausgehend von einer Ausgangsposition in dem Erfassungsbereich der Erfassungseinrichtung 20 bis zu einer Zielposition in dem Erfassungsbereich definiert. Die Definition kann von der Simulationszentrale 10 vorgenommen werden und zwar durch einen Bediener an der Bedienoberfläche 17 und/oder gemäß einer in der Simulationszentrale 10 bereits gespeicherten Testroutine. Bevorzugt kann in der Simulationszentrale 10 vorteilhaft darauf geachtet werden, dass die definierten Bewegungsabläufe 47A, 47B nicht zu Kollisionen der Umfeldsimulationsvorrichtungen 40A, 40B und/oder mit dem Testobjekt 5 führen. Die Bewegungsabläufe 47A, 47B umfassen hierzu vorzugsweise zudem eine Zeitinformation, wann während der definierten Bewegungsabläufe 47A, 47B welche Koordinate auf dem Testfeld 8 erreicht wird. Die Simulationszentrale 10 führt daher eine entsprechende Überwachung zur Verhinderung von Kollisionen durch. Dabei kann die Simulationszentrale 10 bereits nach Definition des Bewegungsablaufs 47A, 47B eine Warnmeldung an den Bediener, beispielsweise an der Bedienoberfläche 17, ausgeben, dass Kollisionen mit einer anderen Umfeldsimulationsvorrichtung 40A, 40B und/oder mit dem Testobjekt 5 zu erwarten sind. Danach geht der Fluss zu einem Schritt S3 weiter.

Bei dem Schritt S3 wird durch die Simulationszentrale 10, durch einen Bediener an der Bedienoberfläche 17 und/oder gemäß einer in der Simulationszentrale 10 bereits gespeicherten Testroutine, oder alternativ durch die mindestens eine Umfeldsimulationsvorrichtung 40A, 40B eine Ausrichtung der mindestens einen Umfeldsimulationsvorrichtung 40A, 40B definiert. Auch hier führt die Simulationszentrale 10 eine entsprechende Überwachung zur Verhinderung von Kollisionen durch, wie zuvor in Bezug auf Schritt S2 beschrieben. Danach geht der Fluss zu einem Schritt S4 weiter.

Bei dem Schritt S4 wird die Bewegung der mindestens einen Umfeldsimulationsvorrichtung 40A, 40B auf der Grundlage der zuvor definierten Bewegungsabläufe 47A, 47B gestartet. Die Simulationszentrale 10 und/oder die mindestens eine Umfeldsimulationsvorrichtung 40A, 40B prüft dann die Ausrichtung der mindestens einen Umfeldsimulationsvorrichtung 40A, 40B anhand der Position der mindestens einen Umfeldsimulationsvorrichtung 40A, 40B, die von der mindestens einen Umfeldsimulationsvorrichtung 40A, 40B und/oder der Erfassungsvorrichtung 20 empfangen werden. Während der Bewegung der mindestens einen Umfeldsimulationsvorrichtung 40A, 40B wird ein Vergleich der IST-Position der Umfeldsimulationsvorrichtungen 40A, 40B mit den Daten 56 des Testobjekts 5 durchgeführt. Je nach Ergebnis regelt die Simulationszentrale 10 und/oder die mindestens eine Umfeldsimulationsvorrichtung 40A, 40B die Bewegung einschließlich der Ausrichtung der mindestens einen Umfeldsimulationsvorrichtung 40A, 40B. Auch hier führt die Simulationszentrale 10 eine entsprechende Überwachung zur Verhinderung von Kollisionen durch, wie zuvor in Bezug auf Schritt S2 beschrieben. Noch dazu können/kann die Simulationszentrale 10 und/oder die Umfeldsimulationsvorrichtungen 40A, 40B für eine vorbestimmte Zeit im Voraus berechnen, ob der durchzuführende Bewegungsablauf zu Kollisionen führt und dann entsprechende Maßnahmen einleiten, um eine Kollision zu verhindern. Hierbei werden auch Erfassungsergebnisse der Sensorik 43A, 43B verwendet, mit welcher die Umfeldsimulationsvorrichtungen 40A, 40B ihr Umfeld erfassen. Danach ist das Verfahren beendet.

Bei dem Betrieb des Umfeldsimulationssystems 2 und dem von diesem durchgeführten Verfahren findet also eine Ausgabe der Position der mindestens einen Umfeldsimulationsvorrichtung 40A, 40B im Testfeld 8 über diverse Schnittstellen statt, nämlich die Schnittstellen 11, 12 und/oder die Sende-Empfangseinrichtungen 41A, 41B. Außerdem findet eine Ausgabe der Ausrichtung des Testobjekts 5 über diverse Schnittstellen statt, nämlich die Schnittstellen 11, 12 und/oder die Sende-Empfangseinrichtungen 41A, 41B. Die Ausgabe kann je nach Anwendungsfall fortlaufend oder intermittierend, also mit vorbestimmten zeitlichen Abständen, erfolgen. Auf dieser Grundlage findet eine Interaktion zwischen Umfeldsimulationssystem 2 und Testobjekt 5 statt. Beispielsweise können speziell für ein Kraftfahrzeug (KFZ) zusätzlich Restbussimulationen durchgeführt werden, die vorbestimmte Betriebssituationen des Fahrzeugs simulieren, wobei sich das Testobjekt 5 bzw. Fahrzeug im Prüfstand 1 dennoch im Stillstand befindet. Solche Restbussimulationen sind beispielsweise die Einspielung von Erfassungsergebnissen, die sich bei einer vorbestimmten Fahrgeschwindigkeit des Fahrzeugs ergeben oder bei einer Kurvenfahrt ergeben, usw.

Mit anderen Worten, das Umfeldsimulationssystem 2 ist ausgestaltet, ein Verfahren zur Positionierung verschiedener Objekte, nämlich der mindestens einen Umfeldsimulationsvorrichtung 40A, 40B, in einem dreidimensionalen Raum durchzuführen. Das Objekt ist mit einem Trägerfahrzeug bewegbar, dessen momentane IST-Position über eine positionserfassende Sensorik, nämlich die Erfassungsvorrichtung 20 und/oder die Sensorik 43A, 43B ermittelt und von einer Software ausgewertet wird. Dadurch ist das Trägerfahrzeug in der Lage, sich autonom zu einer vorgegebenen SOLL-Position zu bewegen. Diese SOLL-Position lässt sich über die Bedieneroberfläche 17 des Umfeldsimulationssystems 2 einstellen. Zusätzlich können beliebige Bewegungsabläufe 47A, 47B definiert und parametrisiert werden.

Somit können mit dem Umfeldsimulationssystem 2 ein beliebiger Bewegungsablauf und eine absolute Positionierung von Hindernissen im Testfeld 8 zu jedem Zeitpunkt und an beliebigen Orten im Erfassungsbereich der Erfassungsvorrichtung 20 Messbereich realisiert werden. Dabei wird die Bewegung zu einer Position erfasst und nicht nur das Ziel selbst. Dadurch ist eine Positionierung mit höherer Genauigkeit in einem größeren Erfassungsbereich möglich als mit einem System, bei welchem vor allem das Erreichen der vorbestimmten Position betrachtet wird.

Mit dem vorangehend beschriebenen Verfahren kann insbesondere mindestens einer der folgenden Tests durchgeführt werden: Validierung von Ultraschallsensorik, Validierung von Kamerasensorik, Validierung von Infrarotkamerasensorik, Validierung von Nahbereichsradar (ShortRangeRadar), Validierung von Fernbereichsradar (LongtRangeRadar), Validierung von Lidar-Systemen. Selbstverständlich ist ein Test bzw. einer oder mehrere der Tests von anderen Systemen denkbar, soweit hierfür die Funktionen des Umfeldsimulationssystems 2 einsetzbar sind.

Ist das Testobjekt 5 ein Fahrzeug, kann mit dem Umfeldsimulationssystem 2 eine Validierung von Fahrzeugfunktionen im Seriennahenzustand oder im Serienzustand durchgeführt werden. Dadurch ist eine Bewertung des Gesamtsystems einschließlich Einbauposition der Sensorik 50, Konstruktion des Testobjekts 5, Software, usw. und von folgenden Einzelsystemen und deren Kombinationen möglich: Parkasisstent (PDC = Park Distance Control), Abstandsregeltempomat (ACC = Adaptive Cruise Control), Rangier-Brems-Assistent, Notbremsassistent, Nachtsichtassistent (Night Vision), Toter-Winkel-Erfassungsassistent (BSD = Blind Spot Detection), Fußgängerschutz, Ausparkassistent, Autonomes Fahren oder sonstige Systeme, die eine Umfelderfassung am Fahrzeug bzw. Testobjekt 5 nutzen.

Insbesondere, wenn das Testobjekt 5 ein Roboter ist, ist das Umfeldsimulationssystem 2 außerdem ausgestaltet, mindestens eine Bewegung des Testobjekts 5, eine Bewegungsgeschwindigkeit und - richtung des Testobjekts 5, eine vom Testobjekt 5 ausgeübte Kraft oder Drehmoment zu überwachen. Hierfür hat das Umfeldsimulationssystem 2 in der Erfassungsvorrichtung 20 und/oder einer separaten Erfassungsvorrichtung mindestens eine Erfassungseinrichtung, die Messungen mittels mindestens eines der nachfolgend genannten Komponenten ausführt, nämlich Rotationstheodolit(en), Laserradar, mindestens einer Kamera zur Beobachtung von Markern, Lasertrackern ohne oder mit Orientierungsempfängern zur Erfassung der Orientierung der Kraft und/oder des Drehmoments, usw. Es sind selbstverständlich alternativ oder zusätzlich andere geeigneten Messverfahren für das Umfeldsimulationssystem 2 möglich.

Unter Rotationtheodoliten werden hierin Theodoliten verstanden, die in ihrer Lage veränderlich sind und erfassen, wie zum Beispiel eine Kugel in einer Halterung in eine beliebige Richtung geschwenkt und/oder gedreht wird. Damit kann zum Beispiel einem realen Agenten, der insbesondere ein anderer Roboter oder eine Bedienperson ist, auf seinen Weg im dreidimensionalen Raum gefolgt werden. Es handelt sich folglich um eine Art "Indoor GPS", mit dem ein Objekt entlang seiner Bewegungskurve verfolgt werden kann, wobei jede Position des Objekts absolut genau erfasst werden kann.

Eine derartige Erfassung ist beispielsweise hilfreich bei der Handhabung von Bauteilen zur Montage durch mindestens einen Roboter. Beispielsweise ist alleine durch die Roboter aufgrund von Toleranzketten eine absolut positionsgenaue Positionierung von Elementen an einem Bauteil nicht möglich. Daher wird die Genauigkeit der Positionierung und anschließenden Montage dadurch erreicht, dass die Erfassungsvorrichtung 20 und/oder die separate Erfassungsvorrichtung alle Bewegungen der Roboter überwachen/überwacht und die gewonnen Erfassungsergebnisse über die Kommunikationsschnittstelle an die Simulationszentrale 10 senden.

In der Simulationszentrale 10 können die erfassten Ist-Daten der Roboterbewegung mit den vorgegebenen Solldaten eines Programms verglichen werden, das einer vorbestimmten Bewegung vorgibt. Werden bei diesem Vergleich Abweichungen der Ist-Bewegung von der vorbestimmten Bewegung oder Sollbewegung festgestellt, kann das Programm Änderungen generieren, um zum Beispiel den erfassten Ist-Wert durch Abänderung zum Beispiel eines Parameters der Roboterbewegung an den vorgegebenen Sollwert der Programmierung automatisch anzupassen und/oder einen oder mehrere Arbeitsschritte der miteinander kollaborierenden Roboter automatisch zu optimieren.

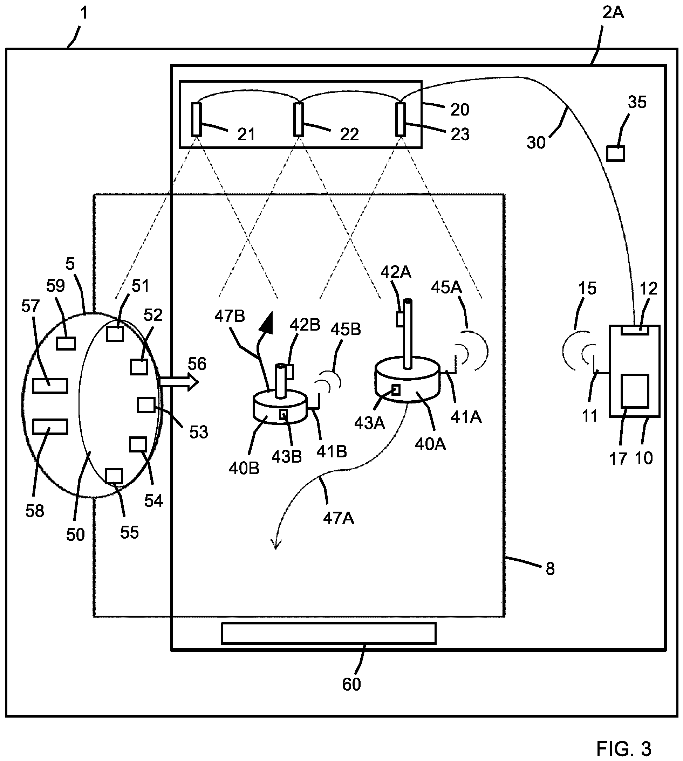

Fig. 3 zeigt ein Umfeldsimulationssystem 2A gemäß einem zweiten Ausführungsbeispiel. Das Umfeldsimulationssystem 2A gemäß dem vorliegenden Ausführungsbeispiel umfasst zusätzlich zu den Komponenten des Umfeldsimulationssystems 2 gemäß dem vorangehenden Ausführungsbeispiel aus den Fig. 1 und 2 noch eine Umweltsimulationsvorrichtung 60.

Die Umweltsimulationsvorrichtung 60 ist ausgestaltet, die Umgebungsbedingungen am Testfeld 8 je nach Vorgabe zu ändern. Dabei werden insbesondere Umweltbedingungen simuliert oder nachgestellt.

Jedoch ist zusätzlich oder alternativ auch eine Regensimulation möglich, insbesondere unter Verwendung einer Sprinkleranlage. Dadurch ist zudem eine wechselbare Oberflächenbeschaffenheit des Testfelds 8 und/oder des Testobjekts 5 und/oder der Umfeldsimulationsvorrichtung 40A, 40B möglich, wie beispielsweise glatt, rau, nass, usw.

Zusätzlich oder alternativ ist die Umweltsimulationsvorrichtung 60 ausgestaltet, beispielsweise unterschiedliche Helligkeitsszenarien zu erzeugen. Dies kann insbesondere durch Dimmen der Beleuchtung erfolgen. Dadurch ist beispielsweise eine Simulation von Tag, Nacht, Dämmerung, Sonneneinstrahlung oder sonstiger spezieller Lichtszenarien möglich. Mittels mindestens eines Stroboskops kann die Umweltsimulationsvorrichtung 60 zudem Blitzlichtszenarien erzeugen.

Zusätzlich oder alternativ ist die Umweltsimulationsvorrichtung 60 ausgestaltet, unterschiedliche Lichtwechsel zu erzeugen. Als Lichtwechsel sind in Bezug auf ein Fahrzeug als Testobjekt 5 Lichtänderungen aufgrund eines entgegenkommenden Fahrzeugs oder Lichtänderungen aufgrund eines Fahrens von einer beleuchteten Straße in eine unbeleuchtete Straße, usw zu verstehen. Lichtwechsel können durch Änderung der Steuerung der Beleuchtung, wie Dimmen, Ein- oder Ausschalten von Lichtquelle(n), erfolgen.

Zusätzlich oder alternativ ist die Umweltsimulationsvorrichtung 60 ausgestaltet, beispielsweise unterschiedliche Windgeschwindigkeiten zu erzeugen, insbesondere mit mindestens einem Windkanal. Dadurch ist eine Windsimulation möglich.

Somit kann mit der Umfeldsimulationssystem 2A die Realität der Umgebung für das Testobjekt 5 noch weiter gesteigert werden. Dadurch können noch realitätsnähere Tests durchgeführt werden. Damit sind insbesondere für Fahrzeuge noch bessere Ergebnisse erzielbar als bei dem vorangehenden Ausführungsbeispiel.

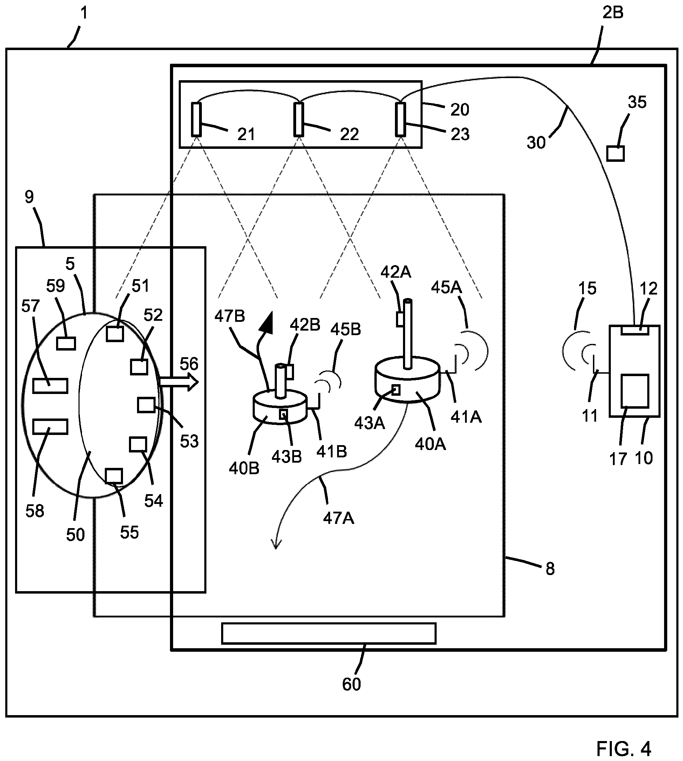

Fig. 4 zeigt ein Umfeldsimulationssystem 2B gemäß einem dritten Ausführungsbeispiel. Das Umfeldsimulationssystem 2B gemäß dem vorliegenden Ausführungsbeispiel hat zusätzlich zu den Komponenten der Umfeldsimulationssysteme 2 oder 2A gemäß den vorangehenden Ausführungsbeispielen noch ein Testobjekt-Bewegungsfeld 9.

Somit ist das Testobjekt 5 bei dem vorliegenden Ausführungsbeispiel im Testbetrieb bewegbar. Dies kann beispielsweise hilfreich sein, um für ein Fahrzeug als Testobjekt 5 einen Einparkvorgang zu testen, die mit Unterstützung von diversen Fahrerassistenzsystemen 57, 58 vorgenommen wird. Solche Fahrerassistenzsysteme 57, 58 sind beispielsweise der Parkasisstent und/oder der Rangier-Brems-Assistent und/oder der Notbremsassistent und/oder der Nachtsichtassistent und/oder der Toter-Winkel-Erfassungsassistent und/oder ein Fußgängerschutzassistent und/oder der Ausparkassistent oder sonstige Systeme.

Dadurch können noch realitätsnähere Tests durchgeführt werden, so dass insbesondere für Fahrzeuge noch bessere Ergebnisse erzielbar sind als bei den vorangehenden Ausführungsbeispielen.

Alle zuvor beschriebenen Ausgestaltungen des Umfeldsimulationssystems 2, 2A und Prüfstands 1 können einzeln oder in allen möglichen Kombinationen Verwendung finden. Insbesondere ist eine beliebige Kombination oder ein beliebiger Austausch der Merkmale der Ausführungsbeispiele möglich. Bei Bedarf können Merkmale der Ausführungsbeispiele auch entfallen, soweit die beschriebenen Funktionen gewährleistet sind. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Denkbar ist zudem, das Testobjekt 5 und oder die Umfeldsimulationsvorrichtungen 40A, 40B zu beheizen. Dadurch können weitere in der Realität vorkommende Szenarien getestet werden.

Die Kommunikation zwischen der Simulationszentrale 10 und der Erfassungsvorrichtung 20 muss nicht drahtgebunden ausgeführt sein. Die Kommunikation zwischen der Simulationszentrale 10 und der Erfassungsvorrichtung 20 kann stattdessen zumindest teilweise drahtgebunden ausgeführt sein.

Die Kommunikation zwischen der Simulationszentrale 10 und der mindestens einen Umfeldsimulationsvorrichtung 40A, 40B muss nicht drahtlos ausgeführt sein. Stattdessen kann die Kommunikation zumindest teilweise drahtgebunden durchgeführt werden, soweit dies die 30 Bewegungsabläufe 47A, 47B der mindestens einen Umfeldsimulationsvorrichtung 40A, 40B für den gewünschten Testablauf im Prüfstand 1 nicht behindert.

Denkbar ist zudem, dass der Prüfstand 1 und das Umfeldsimulationssystem 2 und/oder Umweltsimulationsvorrichtung derart ausgestaltet sind, dass an dem Testfeld 8 mindestens zwei Testobjekte 5 angeordnet und gleichzeitig getestet werden können. Hierbei ist es möglich, beispielsweise zwei Testobjekte 5 nebeneinander an dem Testfeld 8 anzuordnen, also beide an der gleichen Seite des Testfelds 8. Alternativ oder zusätzlich ist es möglich, beispielsweise zwei Testobjekte 5 an zwei gegenüberliegenden Seiten des Testfelds 8 anzuordnen. Dadurch sind beliebige Szenarien aus dem realen Betrieb des Testobjekts 5 testbar, wie beispielsweise Nebeneinanderfahren von Fahrzeugen auf zwei Fahrspuren, oder Hintereinanderfahren von Fahrzeugen, usw.

Gemäß einer weiteren Modifikation ist das Umfeldsimulationssystem 2 und/oder Umweltsimulationsvorrichtung ausgestaltet, die Signalstörfestigkeit des Testobjekts 5 zu testen. Hierbei wird getestet, inwieweit Störsignale den sicheren Betrieb des Testobjekts 5 beeinflussen. Derartige Störsignale umfassen alle Signale, die im Umfeld des Testobjekts 5 auftreten, jedoch nicht für das Testobjekt 5 sondern beispielsweise für eine technische Anlage oder Maschine, insbesondere baugleicher Art, bestimmt sind, die in der Nähe vorgesehen ist. Solche Signale können auftreten, wenn die technische Anlage oder Maschine in einem größeren System zum Einsatz kommt, bei welchem Signale beispielsweise drahtlos übertragen werden, wie beispielsweise Funk, Infrarot, usw. In Bezug auf ein Fahrzeug sind derartige Störsignale beispielsweise ein Signal zum Öffnen der Fahrzeugtür eines Fahrzeugs, das neben dem Testobjekt 5 geparkt wird, usw.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### BEZUGSZEICHENLISTE

- 1: Prüfstand
- 2: Umfeldsimulationssystem
- 2A, 2B: Umfeldsimulationssysteme
- 5: Testobjekt
- 8: Testfeld
- 9: Testobjekt-Bewegungsfeld
- 10: Simulationszentrale, Zentrale
- 11: Sende-Empfangseinrichtung
- 15: Signal
- 17: Bedieneroberfläche
- 20: Erfassungsvorrichtung
- 21 - 23: Erfassungseinrichtungen
- 30: Kommunikationsverbindung
- 35: Daten
- 40: Umfeldsimulationsvorrichtung
- 40A, 40B: Umfeldsimulationsvorrichtungen
- 41A, 41B: Sende-Empfangseinrichtung
- 42A, 42B: Marker
- 43A, 43B: Sensoriken
- 45A, 45B: Signal
- 47A, 47B: Bewegungsabläufe
- 50: Sensorik
- 51 - 55: Erfassungseinrichtungen
- 56: Daten
- 57, 58: Fahrerassistenzsysteme
- 59: Marker
- 60: Umweltsimulationsvorrichtung

- S1 - S4: Schritte

## Patentansprüche

1. Umfeldsimulationssystem (2; 2A) für einen Prüfstand (1) zum Testen von technischen Anlagen, Maschinen oder Systemen, insbesondere zum Testen von Assistenzsystemen in oder für Kraftfahrzeuge,
mit mindestens einer Positioniereinrichtung,
mit mindestens einer Umfeldsimulationsvorrichtung (40A, 40B), die mittels der Positioniereinrichtung relativ zu einem insbesondere stationär angeordneten Testobjekt (5) beliebig positionierbar ist,
mit einer Erfassungsvorrichtung (20) mit einem Erfassungsbereich, innerhalb dessen die Erfassungsvorrichtung (20) eine Bewegung der Umfeldsimulationsvorrichtung (40A, 40B) erfassen kann,
wobei das Umfeldsimulationssystem (2; 2A) ferner dazu ausgebildet ist,
- einen vorbestimmten Bewegungsablauf (47A; 47B) für die mindestens eine Umfeldsimulationsvorrichtung (40A, 40B) zu definieren,
- mittels der Erfassungsvorrichtung (20) den vorbestimmten Bewegungsablauf (47A; 47B) in dem Erfassungsbereich zu erfassen, und
- eine Interaktion der mindestens einen Umfeldsimulationsvorrichtung (40A, 40B) mit dem Testobjekt (5) auf der Grundlage des mit der Erfassungsvorrichtung (2) erfassten Bewegungsablaufs (47A; 47B) der mindestens einen Umfeldsimulationsvorrichtung (40A, 40B) auszuwerten.

2. Umfeldsimulationssystem nach Anspruch 1,
**dadurch gekennzeichnet,**
**dass** die Positioniereinrichtung dazu ausgebildet ist, die Umfeldsimulationsvorrichtung (40A, 40B) im Erfassungsraum frei, insbesondere in einem dreidimensionalen Raum, zu positionieren.

3. Umfeldsimulationssystem nach einem der vorangehenden Ansprüche,
**dadurch gekennzeichnet,**
**dass** die Umfeldsimulationsvorrichtung (40A, 40B) zumindest einen mit Infrarotkameras und/oder Lasertrackern erfassbaren Marker (42A; 42B) aufweist, wobei die Erfassungsvorrichtung (20) eine Vielzahl von Infrarotkameras und/oder Lasertrackern aufweist, die derart angeordnet und ausgebildet sind, um im Erfassungsbereich befindliche Marker zu erfassen.

4. Umfeldsimulationssystem nach einem der vorangehenden Ansprüche,
**dadurch gekennzeichnet,**
**dass** das Umfeldsimulationssystem (2; 2A) ferner eine Heiz-Kühleinrichtung aufweist, welches bezüglich der Umfeldsimulationsvorrichtung (40A, 40B) derart angeordnet und ausgestaltet ist, um eine im Erfassungsbereich befindliche Umfeldsimulationsvorrichtung (40A, 40B) thermisch zu beeinflussen.

5. Umfeldsimulationssystem nach einem der vorangehenden Ansprüche,
**dadurch gekennzeichnet,**
**dass** zumindest eine Positioniervorrichtung (40A, 40B) als Roboter ausgebildet ist.

6. Umfeldsimulationssystem nach einem der vorangehenden Ansprüche,
**dadurch gekennzeichnet,**
**dass** zumindest eine Umweltsimulationsvorrichtung (60) vorgesehen ist, welche dazu ausgebildet ist, mindestens eine vorgegebene Umgebungsbedingung und/oder Umwelteinfluß zu simulieren.

7. Umfeldsimulationssystem nach Anspruch 6,
**dadurch gekennzeichnet,**
**dass** die vorgegebene Umgebungsbedingung und/oder Umwelteinfluß zumindest eine der folgenden Umgebungsbedingungen bezeichnet:
- Oberflächenbeschaffenheit eines Testfelds (8), auf dem die mindestens eine Umfeldsimulationsvorrichtung (40A, 40B) bewegbar ist;
- Luftfeuchtigkeit, insbesondere Nebel;
- Regen;
- Helligkeit;
- Lichtwechsel;
- Wind, insbesondere Windrichtung, Windgeschwindigkeit, Windart;
- Lichtblitze.

8. Umfeldsimulationssystem nach einem der vorangehenden Ansprüche,
**dadurch gekennzeichnet,**
**dass** das Umfeldsimulationssystem (2; 2A) dazu ausgebildet ist, ein als Kraftfahrzeug ausgebildetes Testobjekt (5) zu testen.

9. Umfeldsimulationssystem nach Anspruch 8,
**dadurch gekennzeichnet,**
**dass** das Testobjekt (5) zumindest ein Assistenzsystem des Kraftfahrzeugs ist.

10. Umfeldsimulationssystem nach einem der Ansprüche 8 oder 9,
**dadurch gekennzeichnet,**
**dass** das Umfeldsimulationssystem dazu ausgebildet ist, eine Interaktion der Umfeldsimulationsvorrichtung (40A, 40B) und/oder Umweltsimulationsvorrichtung (60) mit dem Testobjekt (5) auf der Grundlage des mit der Erfassungsvorrichtung (2) erfassten Bewegungsablaufs (47A; 47B) der Umfeldsimulationsvorrichtung (40A, 40B) bzw. Umweltsimulationsvorrichtung (60) und von Erfassungsdaten (56) einer Sensorik (50) des Testobjekts (5) auszuwerten.

11. Umfeldsimulationssystem nach Anspruch 10,
**dadurch gekennzeichnet,**
**dass** die Auswertung der Interaktion der Validierung der verwendeten Sensorik (50) und/oder der Validierung eines verwendeten Fahrerassistenzsystems (57, 58) des Fahrzeugs dient.

12. Umfeldsimulationssystem nach einem der vorangehenden Ansprüche,
**dadurch gekennzeichnet,**
**dass** eine Überwachungseinrichtung vorgesehen ist, die derart ausgebildet und angeordnet ist, um den vorbestimmten Bewegungsablauf (47A; 47B) für die mindestens eine Umfeldsimulationsvorrichtung (40A, 40B) zur Verhinderung von Kollisionen zwischen der mindestens einen Umfeldsimulationsvorrichtung (40A, 40B) und dem Testobjekt (5) zu überwachen.

13. Umfeldsimulationssystem nach einem der vorangehenden Ansprüche,
**dadurch gekennzeichnet,**
**dass** mindestens zwei Umfeldsimulationsvorrichtungen (40A, 40B) vorgesehen sind, wobei das Umfeldsimulationssystem (2; 2A) ferner dazu ausgestaltet ist, die vorbestimmten Bewegungsabläufe (47A; 47B) für die mindestens zwei Umfeldsimulationsvorrichtungen (40A, 40B) zur Verhinderung von Kollisionen zwischen den mindestens zwei Umfeldsimulationsvorrichtungen (40A, 40B) zu überwachen.

14. Umfeldsimulationssystem nach einem der vorangehenden Ansprüche,
**dadurch gekennzeichnet,**
**dass** mindestens eine Erfassungseinrichtung vorgesehen ist, die Messungen mittels mindestens eines der nachfolgend genannten Komponenten ausführt:
- Rotationstheodolit,
- Laserradar,
- Kamera zur Erfassung von Markern,
- Lasertracker ohne Orientierungsempfängern,
- Lasertracker ohne Orientierungsempfängern.

15. Prüfstand (1),
mit einem Testfeld (8) zur vorzugsweise stationären Positionierung eines Testobjekts (5), und
mit einem Umfeldsimulationssystem (2; 2A) nach einem der vorangehenden Ansprüche.
